# EUROPEAN PATENT SPECIFICATION

(11) **EP 3 613 022 B1**
(45) Date of publication and mention of the grant of the patent: **15.09.2021**
(21) Application number: 18724992.5
(22) Date of filing: 20.04.2018
(51) Int. Cl.: G07F 13/10, G07F 11/44, G07F 11/00

(54) **DISPENSER OF DISPOSABLE CONTAINERS FOR THE PREPARATION OF BEVERAGES**
SPENDER VON EINWEGBEHÄLTERN ZUR ZUBEREITUNG VON GETRÄNKEN
DISTRIBUTEUR DE RÉCIPIENTS JETABLES POUR LA PRÉPARATION DE BOISSONS

(30) Priority: 20.04.2017 IT 201700043567
(43) Date of publication of application: 26.02.2020
(73) Proprietor: EVOCA S.P.A., 20121 Milano (IT)
(72) Inventor: MASCIANDARO, Emanuele, 20121 Milano (IT)
(74) Representative: Giannini, Manuela
(86) International application number: PCT/IB2018/052772
(87) International publication number: WO 2018/193424

(56) References cited:
- WO-A1-2005/104047
- WO-A1-2015/100133
- WO-A2-01/84514
- US-A- 869 635
- US-A1- 2009 045 212

## Description

### Technical field

The present invention relates to a dispenser of disposable containers for the preparation of beverages.

In particular, the present invention relates to a dispenser of disposable containers for the preparation of beverages of the type comprising a hopper to contain a plurality of disposable containers; a discharge unit to discharge the disposable containers; and a dispensing wheel mounted to rotate about a rotation axis to receive the disposable containers from the hopper and dispense the disposable containers to the discharge unit.

The dispensing wheel comprises a plurality of pockets each designed to receive at least one disposable container and fed by the dispensing wheel above a dispensing plate with an opening to discharge the disposable containers in an output channel of the discharge unit.

The dispenser further comprises an actuating device mounted in the discharge unit to move the dispensing wheel around the rotation axis.

Generally, the actuating device comprises an electric motor, and a gear train to connect an output shaft of the electric motor to an input shaft of the dispensing wheel.

### State of the art

Dispenser of disposable containers for the preparation of beverages are known, for example, from US2009045212, WO0184514, WO2015100133, WO2005104047, US869635. Known dispensers of disposable containers for the preparation of beverages of the above-described type have some drawbacks mainly deriving from the fact that the replacement of the disposable containers with disposable containers of a different shape and/or size requires the replacement of the entire dispenser each time. As a result, shape and/or size change operations are relatively expensive and involve the storage of a relatively large number of dispensers.

### Object and Summary of the Invention

The object of the present invention is to provide a dispenser of disposable containers for the preparation of beverages which is free from the above-described drawbacks and which is simple and inexpensive to implement.

According to the present invention, a dispenser of disposable containers for the preparation of beverages is provided, as claimed in the appended claims.

### Brief Description of the Drawings

The present invention will now be described with reference to the accompanying drawings, which show a non-limitative embodiment thereof, wherein:
Figure 1 is a schematic perspective view, with parts removed for clarity, of a preferred embodiment of the dispenser of the present invention;
Figure 2 is an exploded perspective view, with parts removed for clarity, of the dispenser of Figure 1;
Figure 3 is an exploded perspective view, with parts removed for clarity, of a detail of Figure 2;
Figure 4 is a schematic perspective view, with parts in section and parts removed for clarity, of the dispenser of Figure 1;
Figure 5 is a schematic perspective view, with parts removed for clarity, of a first alternative of the dispenser of Figure 1; and
Figure 6 is a schematic perspective view, with parts removed for clarity, of a second alternative of the dispenser of Figure 1.

### Preferred Embodiments of the invention

With reference to Figures from 1 to 4, number 1 denotes, as a whole, a dispenser of disposable containers 2 for the preparation of beverages.

The dispenser 1 comprises a hopper 3 of a known type, which is designed to contain a plurality of containers 2 and has a downwardly facing converging shape.

The hopper 3 comprises an input end 4, which has a substantially rectangular shape, and extends perpendicularly to a substantially vertical direction 5; and an output end 6, which has a substantially circular shape, and extends perpendicularly to a direction 7 inclined with respect both to a horizontal reference plane and to a vertical reference plane.

The dispenser 1 is further provided with a discharge unit 8 comprising a tubular body 9, which projects downwards from the hopper 3, and is hooked to the output end 6, and a discharge channel 10, which projects downwards from the body 9 to discharge the containers 2 outside the dispenser 1.

The dispenser 1 further comprises a pocketed dispensing wheel 11, which is housed in the body 9, and is mounted to rotate around a rotation axis 12 parallel to the direction 7.

The wheel 11 has a plurality of dragging members 13, which are evenly distributed around the axis 12, have a substantially flat shape, and extend radially towards the outside from an outer surface of the wheel 11.

Each element 13 defines, together with each adjacent element 13, a pocket 14, which is configured to contain a respective container 2, and is fed by the wheel 11 above a dispensing plate 15.

The plate 15 closes the body 9 at the bottom and, hence, the pockets 14, is mounted perpendicular to the direction 7, and has an opening 16 to discharge the containers 2 into the channel 10.

The wheel 11 is rotated about the axis 12 by an actuating device 17, which defines part of the discharge unit 8, and comprises a box-like body 18 fixed below the plate 15, an electric motor 19 projecting downwards from the body 18, and a gear train 20 housed in the body 18 to connect an output shaft (not shown) of the engine 19 and an input shaft 21 of the wheel 11 to one another.

The shaft 21 has a substantially parallelepiped shape, and is bounded by at least one flat face, in the embodiment two flat faces parallel and opposite to one another, to shape couple to one gear in an angularly fixed manner, hereinafter denoted with 20a, of the gear train 20 through a positive mechanical engagement.

The wheel 11 is interchangeable to reconfigure the dispenser 1 depending on the shape and/or size of the containers 2, and is releasably axially locked onto the gear 20a via a coupling device 22.

The device 22 comprises a pair of elastically deformable projections 23, which are formed at a free end of the shaft 21, and are each provided with a respective tooth 24 projecting radially towards the outside from the respective projection 23.

The two projections 23 are configured to extend through the gear 20a following an insertion movement of the shaft 21 through the gear 20a and so as to allow the teeth 24 to axially lock the shaft 21 onto the gear 20a.

Replacement of the wheel 11 requires only disengagement of the teeth 24 from the gear 20a and of the shaft 21 from the gear 20a.

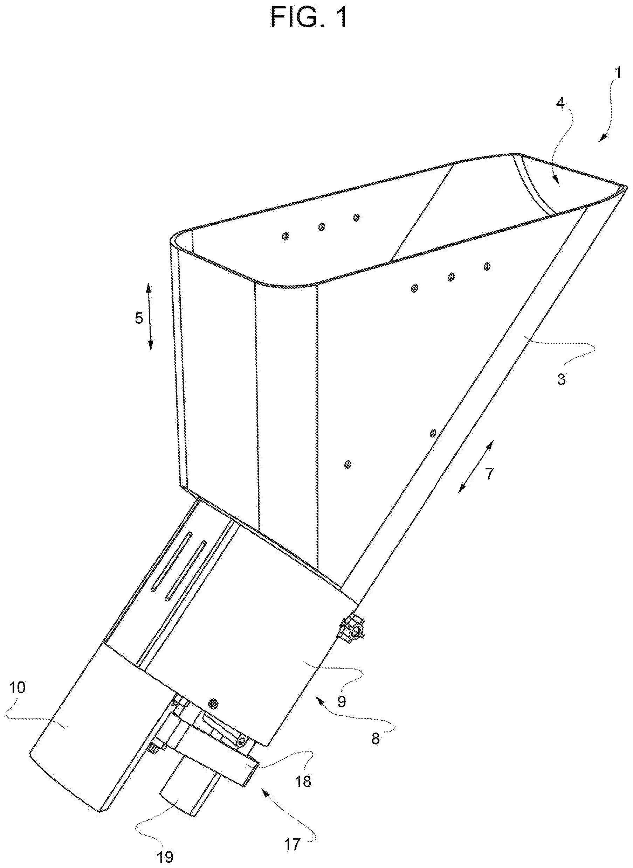

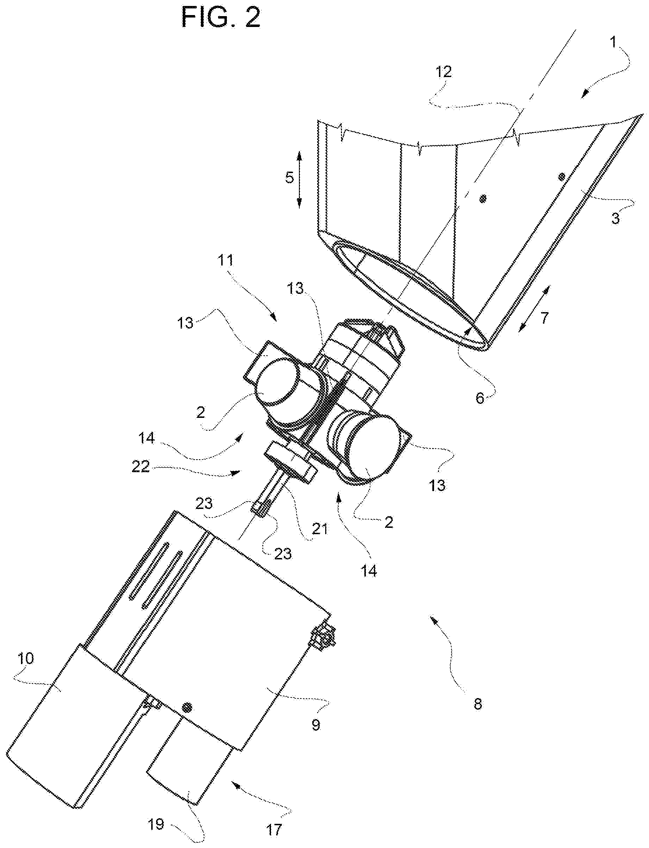

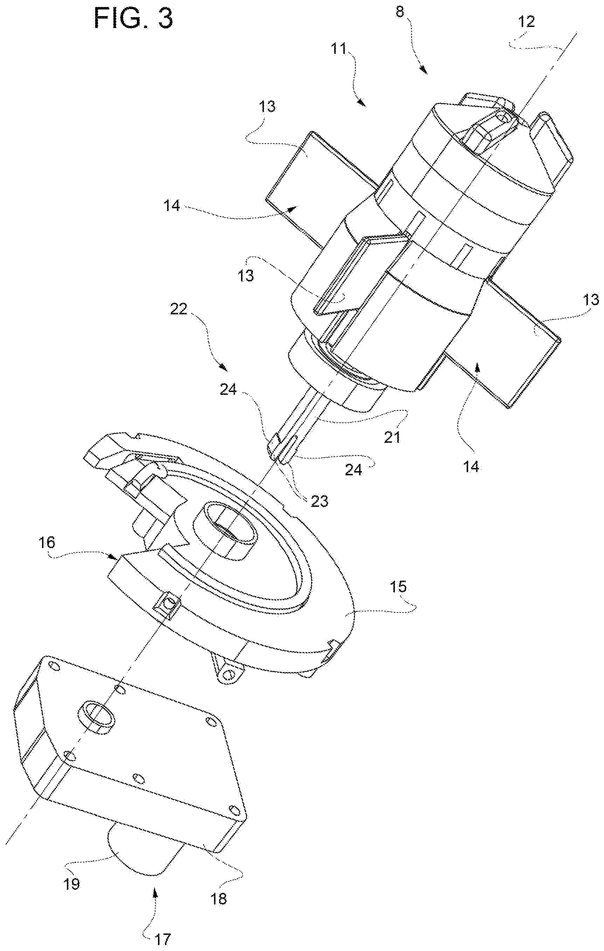

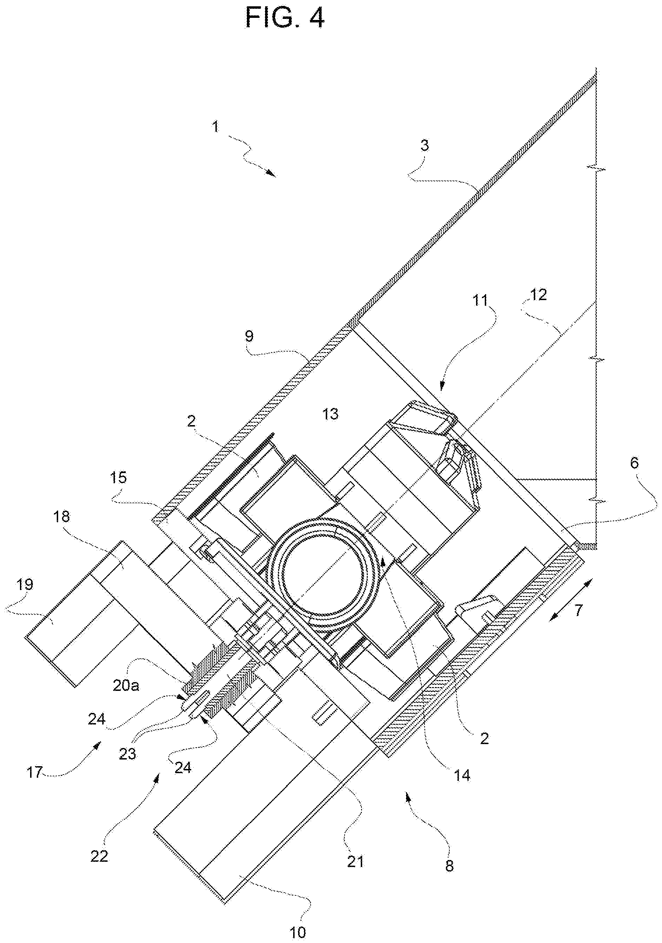

In the dispenser 1 shown in Figures 1 to 4, each container 2 has a shape of a substantially truncated cone capsule, and is fed in the respective pocket 14 with a random orientation, i.e. with its own larger base radially arranged inwards or outwards from the respective pocket 14.

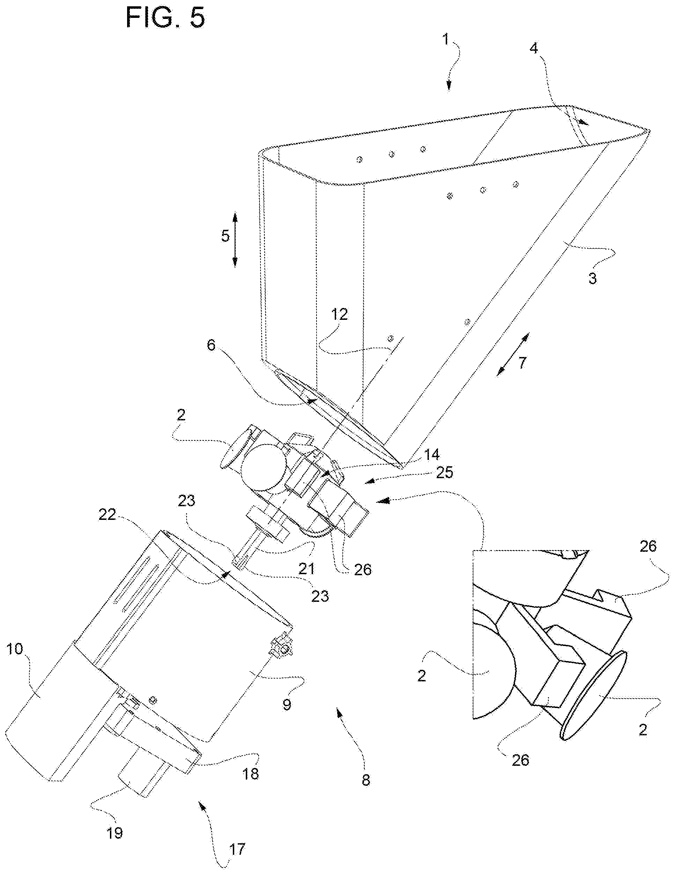

The embodiment shown in Figure 5 differs from the one shown in Figures 1 to 4 solely in that the wheel 11 is replaced with a dispensing wheel 25 similar to the wheel 11 and provided with a plurality of dragging members 26 evenly distributed around the axis 12 and extending radially outwards from an outer surface of the wheel 25.

Each member 26 is substantially L-shaped in a section plane perpendicular to the rotation axis 12 of the wheel 25, which shape allows the pockets 14 to receive the containers 2 all with the same orientation, i.e. with the larger bases arranged radially outwards.

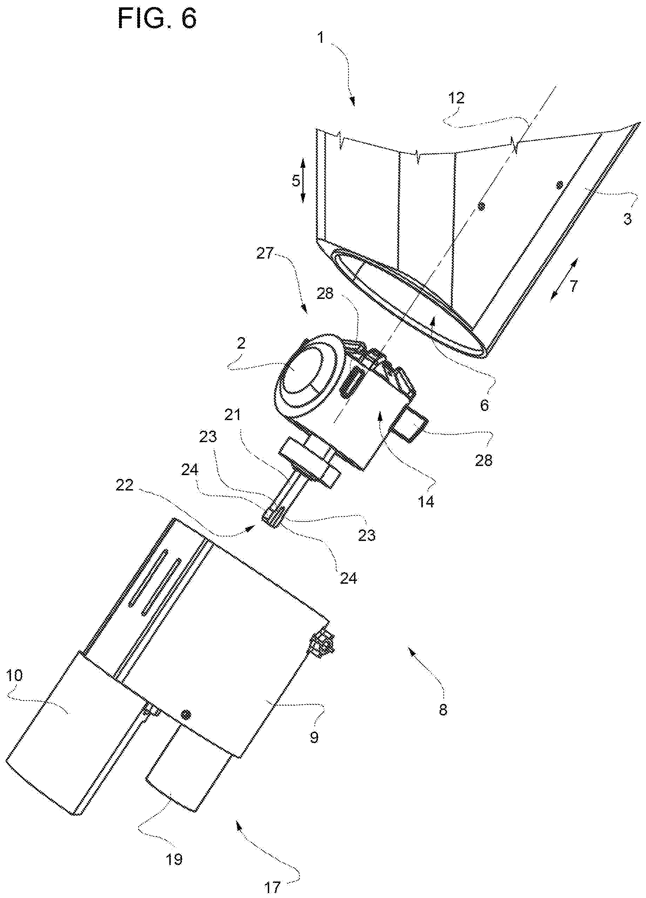

The embodiment shown in Figure 6 differs from the one shown in Figures 1 to 4 in that the wheel 11 is replaced with a dispensing wheel 27 similar to the wheel 11 and provided with a plurality of dragging members 28, which are evenly distributed around the axis 12, extend radially outwards from an outer surface of the wheel 11, and have a radial length shorter than a radial length of the elements 13.

In the embodiment shown in Figure 6, the containers 2 have the shape of a substantially truncated cone pod, and are fed in the corresponding pockets 14 all with the same orientation, i.e. with the larger bases arranged radially towards the inside of the respective pockets 14.

The dispenser 1 is advantageous because the wheels 11, 25, 27 are interchangeable and allow the dispenser 1 to be relatively easily and rapidly reconfigured depending on the shape and/or size of the disposable containers 2, so avoiding replacement of the hopper 3 and of the discharge unit 8.

## Claims

1. A dispenser (1) of disposable containers (2) for the preparation of beverages, the dispenser comprises a hopper (3) to contain a plurality of disposable containers (2); a discharge unit (8) to discharge the disposable containers (2); a dispensing wheel (11; 25; 27) to receive disposable containers (2) from the hopper (3) and to dispense disposable containers (2) to the discharge unit (8), the dispensing wheel (11; 25; 27) is mounted to rotate about a rotation axis (12), and comprises pockets (14) each to receive at least one disposable container (2); and an actuating device (17) to rotate the dispensing wheel (11; 25; 27) about the rotation axis (12); the dispenser is **characterized in that** the dispensing wheel (11; 25; 27) is interchangeable to reconfigure the dispenser (1) depending on the shape and/or size of the disposable containers (2); coupling means (22) are provided to releasably connect the dispensing wheel (11; 25; 27) to the actuating device (17).

2. The dispenser of claim 1, wherein the dispensing wheel (11; 25; 27) has an input shaft (21) configured to couple in an angularly fixed manner with a transmission member (20a) of the actuating device (17).

3. The dispenser of claim 2, wherein the input shaft (21) and the transmission member (20a) have respective coupling portions, each bounded by at least one respective flat coupling face parallel to the rotation axis (12).

4. The dispenser of claim 2 or 3, wherein the input shaft (21) comprises coupling means (23) to couple with the transmission member (20a) in an axially fixed manner.

5. The dispenser of claim 3 or 4, wherein the input shaft (21) comprises at least two elastically deformable projections (23) designed to slidingly engage the transmission member (20a) and to axially lock the input shaft (21) on the transmission member (20a) responsively to an axial insertion of the input shaft (21) into the transmission member (20a).

6. The dispenser of any one of the preceding claims, wherein the discharge unit (8) comprises a discharge channel (10) to discharge the disposable containers (2) from the dispenser, and a dispensing plate (15), which bounds the pockets (14) of the dispensing wheel (11; 25; 27) at the bottom, and has an opening (16) at the discharge channel (10).

7. The dispenser of any one of the preceding claims, wherein the dispensing wheel (11; 25; 27) has a plurality of dragging members (13; 26; 28), each of which tangentially bounds, together with each adjacent dragging member (13; 26; 28), a respective pocket (14).

8. The dispenser of claim 7, wherein each dragging member_(13; 28) has a substantially flat shape.

9. The dispenser of claim 7, wherein each dragging member (26) is substantially L-shaped on a plane perpendicular to the rotation axis (12) of the dispensing wheel (11; 25; 27).

10. The dispenser of any one of the preceding claims, wherein the actuating device (17) is mounted on the discharge unit (8) .

## Patentansprüche

1. Spender (1) für Einwegbehälter (2) zur Zubereitung von Getränken, wobei der Spender Folgendes aufweist: einen Fülltrichter (3) zum Halten einer Vielzahl von Einwegbehältern (2); eine Ausgabeeinheit (8) zum Ausgeben der Einwegbehälter (2); ein Ausgaberad (11; 25; 27) zum Aufnehmen von Einwegbehältern (2) aus dem Fülltrichter (3) und zum Ausgeben von Einwegbehältern (2) an die Ausgabeeinheit (8), wobei das Ausgaberad (11; 25; 27) zur Drehung um eine Drehachse (12) befestigt ist und Taschen (14) aufweist, die jeweils zur Aufnahme von mindestens einem Einwegbehälter (2) sind; und eine Betätigungsvorrichtung (17) zum Drehen des Ausgaberades (11; 25; 27) um die Drehachse (12); wobei der Spender **dadurch gekennzeichnet ist, dass** das Ausgaberad (11; 25; 27) austauschbar ist, um den Spender (1) abhängig von der Form und/oder Größe der Einwegbehälter (2) zu rekonfigurieren; und dass Koppelungsmittel (22) vorgesehen sind, um in lösbarer Weise das Ausgaberad (11; 25; 27) mit der Betätigungsvorrichtung (17) zu verbinden.

2. Spender nach Anspruch 1, wobei das Ausgaberad (11; 25; 27) eine Eingangswelle (21) hat, die zur Koppelung in winkelfixierter bzw. drehfester Weise mit einem Übertragungselement (20a) der Betätigungsvorrichtung (17) konfiguriert ist.

3. Spender nach Anspruch 2, wobei die Eingangswelle (21) und das Übertragungselement (20a) entsprechende Koppelungsteile haben, die jeweils durch mindestens eine entsprechende flache Koppelungsfläche parallel zur Drehachse (12) begrenzt sind.

4. Spender nach Anspruch 2 oder 3, wobei die Eingangswelle (21) Koppelungsmittel (23) zur Koppelung mit dem Übertragungselement (20) in axial fester Weise aufweist.

5. Spender nach Anspruch 3 oder 4, wobei die Eingangswelle (21) zumindest zwei elastisch verformbare Vorsprünge (23) aufweist, die ausgelegt sind, um in gleitender Weise mit dem Übertragungselement (20a) in Eingriff zu kommen, um axial die Eingangswelle (21) an dem Übertragungselement (20a) zu verriegeln, und zwar ansprechend auf ein axiales Einführen der Eingangswelle (21) in das Übertragungselement (20a).

6. Spender nach einem der vorhergehenden Ansprüche, wobei die Ausgabeeinheit (8) einen Ausgabekanal (10) aufweist, um die Einwegbehälter (2) aus dem Spender auszugeben, und eine Ausgabeplatte (15), welche die Taschen (14) des Ausgaberades (11; 25; 27) am Boden begrenzt und eine Öffnung (16) am Ausgabekanal (10) hat.

7. Spender nach einem der vorhergehenden Ansprüche, wobei das Ausgaberad (11; 25; 27) eine Vielzahl von Zugelementen (13; 26; 28) hat, wobei jedes davon tangential zusammen mit jedem benachbarten Zugelement (13; 26; 28) eine jeweilige Tasche (14) begrenzt.

8. Spender nach Anspruch 7, wobei jedes Zugelement (13, 28) eine im Wesentlichen flache Form hat.

9. Spender nach Anspruch 7, wobei jedes Zugelement (26) in einer Ebene senkrecht zur Drehachse (12) des Ausgaberades (11; 25; 27) im Wesentlichen L-förmig ist.

10. Spender nach einem der vorhergehenden Ansprüche, wobei die Betätigungsvorrichtung (17) an der Ausgabeeinheit (8) befestigt ist.

## Revendications

1. Distributeur (1) de contenants jetables (2) pour la préparation de boissons, le distributeur comprend une trémie (3) pour contenir une pluralité de contenants jetables (2) ; une unité d'évacuation (8) pour évacuer les contenants jetables (2) ; une roue de distribution (11 ; 25 ; 27) pour recevoir des contenants jetables (2) en provenance de la trémie (3) et pour distribuer des contenants jetables (2) à l'unité d'évacuation (8), la roue de distribution (11 ; 25 ; 27) est montée pour tourner autour d'un axe de rotation (12), et comprend des poches (14) pour recevoir chacune au moins un contenant jetable (2) ; et un dispositif d'actionnement (17) pour faire tourner la roue de distribution (11 ; 25 ; 27) autour de l'axe de rotation (12) ; le distributeur est **caractérisé en ce que** la roue de distribution (11 ; 25 ; 27) est interchangeable pour reconfigurer le distributeur (1) en fonction de la forme et/ou de la taille des contenants jetables (2) ; des moyens de couplage (22) sont prévus pour raccorder de façon libérable la roue de distribution (11 ; 25 ; 27) au dispositif d'actionnement (17).

2. Distributeur selon la revendication 1, dans lequel la roue de distribution (11 ; 25 ; 27) a un arbre d'entrée (21) configuré pour se coupler de manière angulairement fixe à un organe de transmission (20a) du dispositif d'actionnement (17).

3. Distributeur selon la revendication 2, dans lequel l'arbre d'entrée (21) et l'organe de transmission (20a) ont des portions de couplage respectives, délimitées chacune par au moins une face de couplage plate respective parallèle à l'axe de rotation (12).

4. Distributeur selon la revendication 2 ou 3, dans lequel l'arbre d'entrée (21) comprend des moyens de couplage (23) pour se coupler à l'organe de transmission (20a) de manière axialement fixe.

5. Distributeur selon la revendication 3 ou 4, dans lequel l'arbre d'entrée (21) comprend au moins deux saillies (23) déformables élastiquement conçues pour engager en coulissement l'organe de transmission (20a) et pour verrouiller axialement l'arbre d'entrée (21) sur l'organe de transmission (20a) en réponse à une insertion axiale de l'arbre d'entrée (21) dans l'organe de transmission (20a).

6. Distributeur selon l'une quelconque des revendications précédentes, dans lequel l'unité d'évacuation (8) comprend un canal d'évacuation (10) pour évacuer les contenants jetables (2) depuis le distributeur, et une plaque de distribution (15), qui délimite les poches (14) de la roue de distribution (11 ; 25 ; 27) au fond, et a une ouverture (16) au niveau du canal d'évacuation (10).

7. Distributeur selon l'une quelconque des revendications précédentes, dans lequel la roue de distribution (11 ; 25 ; 27) a une pluralité d'organes de traînage (13 ; 26 ; 28), dont chacun délimite tangentiellement, conjointement avec chaque organe de traînage (13 ; 26 ; 28) adjacent, une poche (14) respective.

8. Distributeur selon la revendication 7, dans lequel chaque organe de traînage (13 ; 28) a une forme sensiblement plate.

9. Distributeur selon la revendication 7, dans lequel chaque organe de traînage (26) est sensiblement en forme de L sur un plan perpendiculaire à l'axe de rotation (12) de la roue de distribution (11 ; 25 ; 27).

10. Distributeur selon l'une quelconque des revendications précédentes, dans lequel le dispositif d'actionnement (17) est monté sur l'unité d'évacuation (8).
